# EUROPÄISCHE PATENTSCHRIFT

(11) **EP 2 433 913 B1**
(45) Veröffentlichungstag und Bekanntmachung des Hinweises auf die Patenterteilung: **20.11.2019**
(21) Anmeldenummer: 11180426.6
(22) Anmeldetag: 07.09.2011
(51) Int. Cl.: C03B 35/10

(54) **Transporteinrichtung**
Transport device
Dispositif de transport

(30) Priorität: 24.09.2010 DE 102010041361
(43) Veröffentlichungstag der Anmeldung: 28.03.2012
(73) Patentinhaber: Schunk Kohlenstofftechnik GmbH, 35452 Heuchelheim (DE)
(72) Erfinder: Markovic, Milisav, 35444 Biebertal (DE); Bährisch, Thomas, 29693 Hodenhagen (DE)
(74) Vertreter: advotec.

(56) Entgegenhaltungen:
- DE-A1- 19 838 844
- DE-U1- 20 220 030
- DE-U1-202009 010 938
- JP-A- H04 354 716
- US-A- 3 993 183
- US-A- 4 263 035

## Beschreibung

Die vorliegende Erfindung betrifft eine Transporteinrichtung für Gegenstände, insbesondere zum Beschicken eines Kühlofens mit Hohlgläsern wie Flaschen, die an einem Tragbalken in einer Reihenanordnung angeordnete Mitnehmer aufweist, die jeweils mit Abstand zueinander angeordnet sind, derart, dass benachbarte Mitnehmer eine Transportaufnahme zur positionierenden Aufnahme eines Gegenstands während einer Transportbewegung des Tragbalkens bilden, wobei die Mitnehmer zumindest in ihrem Kontaktbereich mit den Gegenständen aus einem Kohlenstoffmaterial gebildet sind.

Transporteinrichtungen der eingangs genannten Art werden insbesondere bei der industriellen Herstellung von Hohlgläsern eingesetzt und dienen dazu, die unmittelbar nach dem Formungsvorgang noch heißen Hohlgläser in einer Reihenanordnung einem Kühlofen zuzuführen. Dabei werden die Hohlgläser jeweils vereinzelt in den in einer Reihenanordnung ausgebildeten Transportaufnahmen aufgenommen und gelangen dabei in direkten Kontakt mit den Mitnehmern. Der an der Transporteinrichtung ausgebildete Tragbalken dient zum einen als Plattform oder Basis für die Mitnehmer und zum anderen als über eine Transportstrecke bewegtes Zustellelement.

Im Betrieb wird daher der Tragbalken durch unterschiedliche Temperaturzonen bewegt und unterliegt daher einer entsprechend dynamischen Temperaturbeanspruchung, die regelmäßig im Bereich von 300 °C bis 700 °C liegt. Die bislang bei den bekannten Transporteinrichtungen zum Einsatz kommenden Tragbalken bestehen aus einem metallischen Werkstoff, so dass es aufgrund der dynamischen Temperaturbeanspruchung des Tragbalkens zu Tragbalkenverformungen kommen kann. Aufgrund der lang gestreckten Ausführung des Tragbalkens wird durch die dynamische Temperaturbeanspruchung ein Spannungsverlauf im Tragbalken erzeugt, der vornehmlich zu einer Verbiegung des Tragbalkens gegenüber seiner Längsachse führt. Durch die Verbiegung kann es zu Abweichungen in der gradlinigen Reihenanordnung der am Tragbalken angeordneten Mitnehmer kommen, so dass sich die zwischen den Mitnehmern zur definierten Aufnahme der Gläser eingestellten Abstände ändern können. Hierdurch kann es beim Transport der Gläser beziehungsweise bei einer Übernahme der Gläser durch die Transporteinrichtung durch umfallende Gläser zu Betriebsstörungen kommen.

Aus der DE 198 38 844 A1 ist eine Transporteinrichtung für Gegenstände bzw. Hohlgläser, insbesondere zum Beschicken eines Kühlofens, bekannt, die von einem Trag- wie Einschubbalken lösbar ausgehende Mitnehmer umfasst, wobei ein von aufeinanderfolgenden Mitnehmern und mit diesen in Kontakt gelangender Gegenstand entlang einer Transportstrecke transportierbar ist. Eine entsprechende Transporteinrichtung soll derart weitergebildet werden, dass die Mitnehmer hohe Standzeiten zeigen, wobei auch sichergestellt sein soll, dass die Wärmeableitung derart erfolgt, dass sich in den Gegenständen unerwünschte Spannungen nicht ausbilden können. Hierzu wird vorgeschlagen, dass der Mitnehmer an seiner mit dem Gegenstand in Kontakt gelangenden Fläche einen plattenförmigen Belag aus kohlenstofffaserverstärktem Kohlenstoff aufweist.

US 3 993 183 offenbart einen Tragbalken zum Beschicken eines Ofens (10), an welchem einzelne Mitnehmer (36) befestigt sind.

Der vorliegenden Erfindung liegt daher die Aufgabe zugrunde, eine Transporteinrichtung vorzuschlagen, die eine erhöhte Betriebssicherheit aufweist.

Zur Lösung dieser Aufgabe weist die erfindungsgemäße Transporteinrichtung die Merkmale des Anspruchs 1 auf.

Die erfindungsgemäße Transporteinrichtung weist einen Tragbalken auf, der aus kohlenstofffaserverstärktem Kohlenstoff besteht. Erfindungsgemäß ist somit für den Tragbalken ein Werkstoff gewählt, der über den relevanten Bereich der dynamischen Temperaturbelastung die Formhaltigkeit des Tragbalkens ermöglicht.

Erfindungsgemäß ist zur definierten Anordnung beziehungsweise Positionierung der Mitnehmer der Tragbalken mit einer Positionierungseinrichtung versehen, die vom Tragbalken unabhängig ausgebildet und lösbar mit dem Tragbalken verbunden ist.

Eine vom Tragbalken unabhängige Ausbildung der Positionierungseinrichtung ermöglicht die Kombination konventioneller, also bislang in Kombination mit einem metallischen Tragbalken verwendeter Positionierungseinrichtungen mit dem erfindungsgemäß aus einem kohlenstofffaserverstärkten Kohlenstoff gebildeten Tragbalken. Dabei ermöglicht die formstabile Ausführung des Tragbalkens aus einem kohlenstofffaserverstärkten Kohlenstoff eine Versteifung einer aus einem metallischen Werkstoff gebildeten Positionierungseinrichtung, so dass etwaige Verformungen der Positionierungseinrichtung durch den Tragbalken verhindert werden.

Die Mitnehmer können wahlweise durch die Positionierungseinrichtung ausgebildet sein, also integral an dieser ausgebildet sein, oder auch separat, beispielsweise aus einem Graphit-Material, ausgebildet sein. Insbesondere bei einer Ausgestaltung der Mitnehmer aus kohlenstofffaserverstärktem Kohlenstoff sowie einer ergänzenden Ausgestaltung der Positionierungseinrichtung aus einem kohlenstofffaserverstärkten Kohlenstoff ist es auch möglich, die gesamte Transporteinrichtung umfassend den Tragbalken, die Positionierungseinrichtung und die Mitnehmer einstückig zusammenhängend aus einem kohlenstofffaserverstärktem Kohlenstoff herzustellen.

Alternativ ist es auch möglich, insbesondere für den Fall, dass die Positionierungseinrichtung aus einem metallischen Werkstoff besteht, die Transporteinrichtung mehrteilig auszubilden, wobei grundsätzlich die Möglichkeit besteht, bereits zuvor in Kombination mit einem konventionellen Tragbalken aus Metall verwendete Positionierungseinrichtungen und Mitnehmer mit dem erfindungsgemäß aus einem kohlenstofffaserverstärkten Kohlenstoff hergestellten Tragbalken zu kombinieren.

Nachfolgend werden bevorzugte Ausführungsformen der Erfindung anhand der Zeichnung näher erläutert.

Es zeigen:
- **Fig. 1:**: Eine Transporteinrichtung in einer ersten Ausführungsform in Draufsicht;
- **Fig. 2:**: die in **Fig. 1** dargestellte Transporteinrichtung in Seitenansicht;
- **Fig. 3:**: eine Positionierungseinrichtung der in den **Fig. 1 und 2** dargestellten Transporteinrichtung;
- **Fig. 4:**: eine Transporteinrichtung in einer zweiten, von der Erfindung abweichenden Ausführungsform in Draufsicht;
- **Fig. 5:**: eine Seitenansicht der in **Fig. 4** dargestellten Transporteinrichtung.

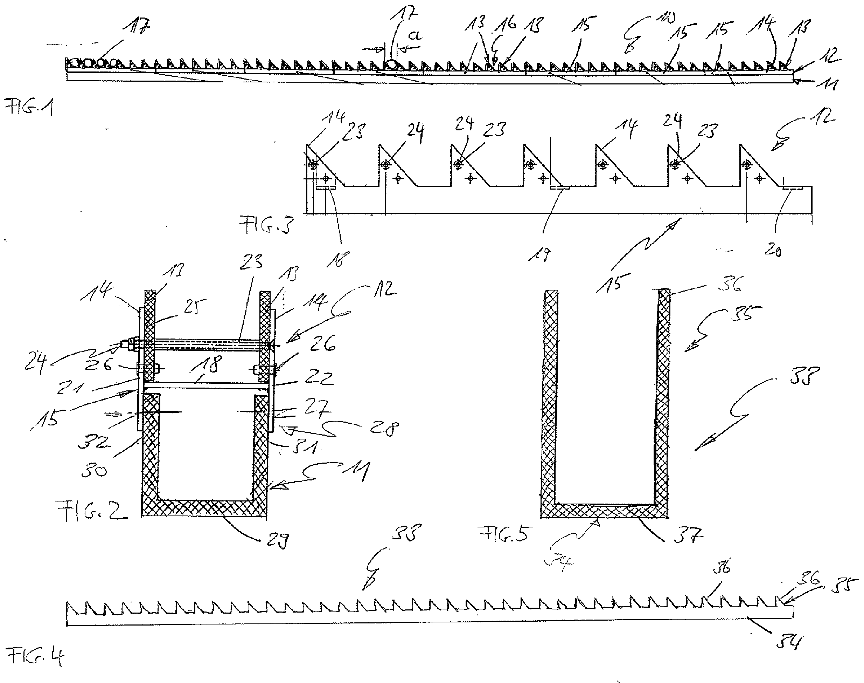

**Fig. 1** zeigt eine Transporteinrichtung 10, die als wesentliche Bestandteile einen Tragbalken 11, eine mit dem Tragbalken 11 verbundene Positionierungseinrichtung 12 und eine Mehrzahl von Mitnehmern 13 aufweist, die jeweils mit einem Mitnehmerfortsatz 14 der Positionierungseinrichtung 12 verbunden sind. Wie ferner **Fig. 1** zu entnehmen ist, ist bei dem dargestellten Ausführungsbeispiel die Positionierungseinrichtung 12 aus einer Mehrzahl von in einer Reihenanordnung jeweils aneinander angrenzend am Tragbalken 11 installierten Positionierungselementen 15 zusammengesetzt. Durch die Positionierungseinrichtung 12 beziehungsweise die an den Positionierungselementen 15 ausgebildeten Mitnehmerfortsätze 14 sind die einzelnen Mitnehmer 13 äquidistant zueinander in einem Abstand a angeordnet, so dass jeweils zwei benachbarte Mitnehmer 13 eine Transportaufnahme 16 zur positionierenden Aufnahme einer Flasche 17 ausbilden. Infolge der durch die Positionierungseinrichtung 12 positionierten Anordnung der Mitnehmer 13 befinden sich die von der Transporteinrichtung 10 aufgenommenen beziehungsweise während einer Bewegung der Transporteinrichtung 10 durch die Transporteinrichtung geführten Flaschen 17 in einer linearen Reihenanordnung.

Wie aus einer Zusammenschau der **Fig. 2 und 3** deutlich wird, ist bei dem hier dargestellten Ausführungsbeispiel die Positionierungseinrichtung 12 beziehungsweise jedes Positionierungselement 15 der Positionierungseinrichtung 12 aus zwei parallel zueinander angeordneten, durch Verbindungsstege 18, 19, 20 miteinander verbundene Positionierungsleisten 21, 22 gebildet, die jeweils mit Mitnehmerfortsätzen 14 versehen sind. Zur Stabilisierung der Relativanordnung der Positionierungsleisten 21, 22 sind diese zusätzlich zu den Verbindungsstegen 18, 19, 20 mit Stützstreben 23 verbunden, die im vorliegenden Fall als Zylinderhülsen ausgebildet sind und durch eine Bolzenverbindung 24 zwischen den Positionierungsleisten gesichert sind. Dabei stützen die Stützstreben 23 gleichzeitig die Mitnehmer 13 gegeneinander ab, die jeweils auf einander gegenüberliegenden Mitnehmerflächen 25 der Positionierungsleisten 21, 22 angeordnet sind. Zusätzlich sind zur verdrehsicheren Anordnung der Mitnehmer 13 auf den Mitnehmerflächen 25 der Positionierungsleisten 21, 22 die Mitnehmer 13 über eine Nietverbindung 26 an den Positionierleisten 21, 22 gesichert.

Bei dem in **Fig. 2** dargestellten Ausführungsbeispiel ist die Positionierungseinrichtung 12 beziehungsweise sind die einzelnen Positionierungselemente 15 der Positionierungseinrichtung 12 aus Metall ausgebildet und den Mitnehmerfortsätzen 14 gegenüber liegende Verbindungsränder 27 der Positionierleisten 21, 22 bilden eine gabelförmige Tragbalkenaufnahme 28 zum Anschluss an den Tragbalken 11 aus. Übereinstimmend mit den Mitnehmern 13 ist der Tragbalken 11 aus einem kohlenstofffaserverstärkten Kohlenstoff gebildet, der, insbesondere in dem Fall des Tragbalkens 11 bei Bedarf zumindest im Bereich seiner Oberfläche verdichtet sein kann. Eine derartige Verdichtung kann beispielsweise durch Infiltrierung der Oberfläche eines karbonisierten und nachfolgend graphitierten Formkörpers mit Pyrolyse-Kohlenstoff erfolgen. Statt der Infiltrierung mit Pyrolyse-Kohlenstoff ist es auch möglich, die Oberfläche des Formkörpers zu silizieren.

Wie insbesondere der **Fig. 2** zu entnehmen ist, ist der Tragbalken 11 mit einem U-förmigen Querschnitt 29 versehen, der an seinen Schenkelleisten 30, 31 jeweils über eine Schraubverbindung 32 mit den Verbindungsrändern 27 der Positionierungseinrichtung 12 verbunden ist.

**Fig. 4** zeigt in einer der **Fig. 1** entsprechenden Darstellung eine Transporteinrichtung 33, die einstückig ausgebildet ist, also aus einem Formkörper gebildet ist, der gleichzeitig durch unterschiedlich ausgebildete Bereiche einen Tragbalken 34, eine Positionierungseinrichtung 35 und an der Positionierungseinrichtung 35 ausgebildete Mitnehmer 36 aufweist.

Wie die in **Fig. 5** dargestellte Seitenansicht der Transporteinrichtung 33 zeigt, weist die Transporteinrichtung 33 einen U-Querschnitt 37 auf, wobei die Mitnehmer 36 als dreieckförmige Fortsätze an dem Tragbalken 34 ausgebildet sind und durch die einstückig mit dem Tragbalken 34 verbundene und definiert positionierte Anordnung gleichzeitig die Positionierungseinrichtung 35 ausbilden.

## Patentansprüche

1. Transporteinrichtung für Gegenstände, insbesondere zum Beschicken eines Kühlofens mit Hohlgläsern wie Flaschen (17), die an einem Tragbalken (11, 34) in einer Reihenanordnung angeordnete Mitnehmer (13, 36) aufweist, die jeweils mit Abstand zueinander angeordnet sind, derart, dass benachbarte Mitnehmer eine Transportaufnahme (16) zur positionierenden Aufnahme eines Gegenstands während einer Transportbewegung des Tragbalkens bilden, wobei die Mitnehmer zumindest in ihrem Kontaktbereich mit den Gegenständen aus einem Kohlenstoffmaterial gebildet sind,
**dadurch gekennzeichnet,**
**dass** der Tragbalken aus kohlenstofffaserverstärktem Kohlenstoff besteht, wobei der Tragbalken mit einer Positionierungseinrichtung (12, 35) zur Positionierung der Mitnehmer versehen ist, wobei die Positionierungseinrichtung lösbar mit dem Tragbalken verbunden ist.

2. Transporteinrichtung nach Anspruch 1,,
**dadurch gekennzeichnet,**
**dass** die Mitnehmer (13) lösbar mit der Positionierungseinrichtung (12) verbunden sind.

3. Transporteinrichtung nach Anspruch 1 oder 2,,
**dadurch gekennzeichnet,**
**dass** die Mitnehmer (36) durch die Positionierungseinrichtung (35) am Tragbalken (34) ausgebildet sind.

4. Transporteinrichtung nach Anspruch 2 oder 3,
**dadurch gekennzeichnet,**
**dass** die Mitnehmer (13, 36) aus kohlenstofffaserverstärktem Kohlenstoff bestehen.

## Claims

1. A transport device for objects, in particular for charging a lehr with hollow glasses, such as bottles (17), the transport device having drivers (13, 36) disposed in a row on a support beam (11, 34) and spaced apart from each other in such a manner that adjacent drivers form a transport receptacle (16) for receiving an object in a positioning manner during a transport movement of the support beam, the drivers being made of a plastic material at least in their area of contact with the objects,
**characterized in that**
the support beam consists of carbon-fiber-reinforced carbon, the support beam being provided with a positioning device (12, 35) for positioning the drivers, the positioning device being detachably connected to the support beam.

2. The transport device according to claim 1,
**characterized in that**
the drivers (13) are detachably connected to the positioning device (12).

3. The transport device according to claim 1 or 2,
**characterized in that**
the drivers (36) are formed by the positioning device (35) on the support beam (34).

4. The transport device according to claim 2 or 3,
**characterized in that**
the drivers (13, 36) consist of carbon-fiber-reinforced carbon.

## Revendications

1. Dispositif de transport pour des objets, notamment pour alimenter un four de recuit en verres creux tel que bouteilles (17), le dispositif de transport ayant des entraîneurs (13, 36) disposés en une rangée sur une poutre (11, 34) et espacés l'un de l'autre de telle manière que des entraîneurs adjacents forment un logement de transport (16) pour le logement positionnant d'un objet pendant un mouvement de transport de la poutre, les entraîneurs étant en matière plastique au moins dans leur zone de contact avec les objets,
**caractérisé en ce que**
la poutre est en carbone renforcé par des fibres de carbone, la poutre étant munie d'un dispositif de positionnement (12, 35) destiné à positionner les entraîneurs, le dispositif de positionnement étant relié de manière amovible avec la poutre.

2. Dispositif de transport selon la revendication 1,
**caractérisé en ce que**
les entraîneurs (13) sont reliés de manière amovible avec le dispositif de positionnement (12).

3. Dispositif de transport selon la revendication 1 ou 2,
**caractérisé en ce que**
les entraîneurs (36) sont formés par le dispositif de positionnement (35) sur la poutre (34).

4. Dispositif selon la revendication 2 ou 3,
**caractérisé en ce que**
les entraîneurs (13, 36) sont en carbone renforcé par des fibres de carbone.
